# EUROPÄISCHE PATENTANMELDUNG

(11) **EP 0 753 773 A1**
(43) Veröffentlichungstag der Anmeldung: **15.01.1997**
(21) Anmeldenummer: 96110286.0
(22) Anmeldetag: 26.06.1996
(51) Int. Cl.: G02B 6/38

(54) **Optoelektrische Steckvorrichtung**

(30) Priorität: 30.06.1995 DE 19523824; 19.07.1995 DE 19526267
(71) Anmelder: Gebrüder Merten GmbH & Co. KG, D-51674 Wiehl (DE)
(72) Erfinder: Erbse, Karl-Ulrich, Dipl.-Phys., 51647 Gummersbach (DE); Gringmann, Klaus, 51647 Gummersbach (DE); Schmidt, Helmut, Dipl.-Ing., 51647 Gummersbach (DE); Stefanski, Manfred, Dipl.-Ing., 51647 Gummersbach (DE); Vicktorius, Richard, Dipl.-Ing., 50739 Köln (DE)
(74) Vertreter: Selting, Günther, Dipl.-Ing.

(57) **Zusammenfassung**

Die Erfindung bezieht sich auf eine elektrische Steckvorrichtung, wie Stecker oder Kupplungssteckdose, die einen Basiskörper für die Befestigung der elektrischen Kontakte besitzt. Neben den elektrischen Kontakten hat die Steckvorrichtung noch eine optische Anordnung zum Ein- und/oder Auskoppeln von Lichtsignalen über Lichtleiter (22, 23). Der Basiskörper (10) hat entsprechend der Anzahl der optischen Leitungsadern (22, 23) jeweils bis an die Lichtfenster (24, 25), (24a, 24b), (25a, 25b) des Isoliermantels der Steckvorrichtung (1) durchtretende hülsenartige Aufnahmen (21) für die Enden der optischen Leitungsadern (22, 23) und koaxial zu den Aufnahmen (21) verlaufende Klemmvorrichtungen (29).

## Beschreibung

Die Erfindung bezieht sich auf eine, mit einer Anschlußleitung verbindbare , elektrische Steckvorrichtung wie Stecker oder Kupplungssteckdose, die einen die elektrischen Kontakte aufnehmenden Basiskörper besitzt, und deren Anschlußadern jeweils mit den Anschlußköpfen der Anschlußkontakte verbunden sind und neben den elektrischen Leitungsadern noch wenigstens eine optische Leitungsader in die Leitung eingebettet und in die Steckvorrichtung eingeführt ist.

Eine derartige Steckvorrichtung soll den Zweck erfüllen, ein externes Gerät, beispielsweise eine Waschmaschine, an das Stromnetz (Hausnetz) und gleichzeitig an einen elektrischen Steuerbus anzuschließen, wobei zur Vermeidung von Störeinstreuungen von der Netzspannung die Signalübertragung von der Steckdose bis zum externen Gerät auf optischem Wege erfolgt.

Während eine elektrische Signalleitung, die zusammen mit einer Versorgungsleitung in einem gemeinsamen Leitungsstrang eingebettet ist, von der Versorgungsleitung gestört wird, werden optische Signale durch Ströme oder Spannungen nicht beeinflußt.

In der DE 32 26 265 A1 ist eine flexible elektrische Leitung beschrieben, die außer den elektrischen Leitern für den Netzanschluß eines Gerätes noch einen Lichtleiter enthält, über den optische Signale übertragen werden können.

In der DE 32 27 770 C2 ist eine elektrische Steckvorrichtung mit einem Stecker und einer Kupplungssteckdose beschrieben, die den Anschluß einer flexiblen Netzleitung ermöglicht und außerdem einen gebäudeseitig installierten Lichtwellenleiter mit einem Lichtwellenleiter der anzuschließenden flexiblen Leitung optisch verbindet. Hierzu ist wenigstens ein Kontaktteil der elektrischen Steckvorrichtung zugleich als Lichtwellenleiter-Steckvorrichtung ausgebildet.

Die Steckvorrichtung verbindet den elektrischen und den optischen Teil einer Leitung mit den gebäudeseitigen elektrischen Versorgungsleitungen und den optischen Datenleitungen.

Zum Fernschalten, Fernsteuern, Regeln und Überwachen von Geräten werden elektrische Bussysteme verwendet, die an den Enden der Busleitungen Busankoppler besitzen, an die, ggf. über Schnittstellen, die Steuerein- oder -ausgänge der Geräte anschließbar sind. Die Busankoppler können komplexe elektronische Schaltungsanordnungen mit einem Mikroprozessor enthalten und sind in der Lage, Datentelegramme zu erzeugen und zu senden sowie zu empfangen und auszuwerten, ferner ankommende Steuerbefehle zu verarbeiten. Ein derartiges Bussystem für die Gebäudesystemtechnik ist in der EP 0344609 B1 beschrieben.

Die Aufgabe der Erfindung besteht darin, eine elektrische Steckvorrichtung wie Stecker oder Kupplungssteckdose für den gleichzeitigen Anschluß eines elektrischen Gerätes an das Stromnetz und an ein Busleitungssystem zu schaffen, mit der die Übertragung von Lichtsignalen ermöglicht wird. Die optische Anordnung soll hierbei unabhängig von der elektrischen Anordnung sein.

Die Lösung dieser Aufgabe erfolgt bei einer ersten Variante der Steckvorrichtung erfindungsgemäß mit den im Patentanspruch 1 aufgeführten Merkmalen und bei einer zweiten Variante der Steckvorrichtung mit den im Patentanspruch 9 angegebenen Merkmalen.

Die erfindungsgemäße Steckvorrichtung ist generell auf der Grundlage üblicher Steckvorrichtungen für die Netzversorgung ausgebildet.

Für die Integration von Hausgeräten, beispielsweise Waschmaschinen, Trocknern, Gefriergeräten oder dgl., in ein elektronisches Datenübertragungssystem, beispielsweise elektrisches Bussystem, sind zusätzlich Leitungen (Steuerleitungen) zum externen Gerät erforderlich.

Trotzdem soll dadurch der Anschluß eines Gerätes genauso unproblematisch bleiben wie bisher, wobei das vorübergehende oder dauerhafte Entfernen des Gerätes, z. B. zu Reinigungszwecken, aus dem Bussystem vom Benutzer selbst durch Ziehen des Netzsteckers erfolgen soll.
Hierzu sei bemerkt, daß der Anschluß eines weit von der entsprechenden Wandsteckdose entfernt aufgestellten externen Gerätes über eine separate Verlängerungsleitung erfolgen kann, die einerseits einen Stecker und andererseits eine Kupplungssteckdose aufweist.

Daraus folgt, daß Versorgungsleitungen und Steuerleitungen vorteilhaft gemeinsam in einem Leitungsstrang von der Steckdose bis zum externen Gerät verlaufen. Dementsprechend ist im Oberbegriff des Anspruchs 1 und 9 davon die Rede, daß die optischen Leitungsadern in die Leitung eingebettet sind. Daraus folgt, daß keine gewöhnliche elektrische Leitung verwendet werden kann, sondern eine solche mit wenigstens einem eingebetteten optischen Leiter, wobei dann der Mantel der Leitung ein vorbereitetes Bett aufweist, in das der optische Leiter beispielsweise eingeclipst oder hineingedrückt werden kann. Die Erfindung soll jedoch auch für den Fall gelten, daß der optische Leiter nicht in die Leitung eingebettet, sondern parallel und separat zur elektrischen Anschlußleitung geführt ist, beispielsweise mit Klammern oder Kabelbindern außen an der elektrischen Leitung angebunden und zusammen mit der elektrischen Leitung in die Leitungstülle des Steckers oder der Kupplungssteckdose eingeführt ist.

Der Vorteil besteht darin, daß eine übliche elektrische Leitung und jeder 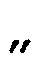 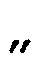 passende 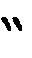 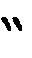 optische Leiter benutzt werden kann.

Aus Gründen der Störsicherheit und Betriebssicherheit der Geräte sind die Steuerleitungen als Lichtleiter ausgebildet, und der Lichtaustausch erfolgt durch die elektrischen Steckvorrichtung hindurch.

Der Vorteil der erfindungsgemäßen Ausbildung besteht darin, daß die Integration von externen Geräten, wie Hausgeräten in ein Bussystem, beispielsweise in ein Bussystem nach der "European Installation Busassociation" (EIBA), anwender- und benutzerfreundlich erfolgen kann, wobei das Anschließen und das Trennen vom Bus vom Benutzer des Gerätes selbst durch Stecken oder Ziehen des Netzsteckers erfolgt, so daß gleichzeitig das Gerät Spannung erhält oder spannungslos wird. Dadurch, daß beide Systeme unabhängig voneinander in der Steckvorrichtung integriert sind, können die üblichen elektrischen Kontakte, wie Stifte und Steckkontakte, ohne Veränderungen benutzt werden, wodurch eine wirtschaftliche Herstellung der Steckvorrichtung ermöglicht wird.

Die erfindungsgemäße Steckvorrichtung läßt sich also trotz der erhöhten technischen und mehrfunktionellen Verwendung auf einfache Weise herstellen.

Wesentlich für die Funktion der optischen Signalübertragung ist die exakte Einhaltung der Konfiguration des Lichtein- bzw. Lichtaustritts zu den elektrischen Kontakten, hier zu den Steckerstiften oder dem Schutzkontakt bzw. den Steckkontakten der Kupplung.

Während die elektrische Verbindung zwischen Stecker und Steckdose durch Ineinandergreifen der Steckerstifte in Steckkontakten der Steckdose hergestellt wird, braucht für die optische Übertragung zwischen Stecker und Steckdose keine ineinandergreifende Verbindung vorgesehen zu sein, sondern die Lichtfenster des Steckers und die Lichtfenster der Steckdose sollen sich mit ihren Stirnflächen vorzugsweise abstandslos und achsparallel gegenüberliegen. Ein Versatz der optischen Lichtstrecken zwischen Stecker und Steckdose führt stets zu Lichtverlusten. Deshalb werden verhältnismäßig große Lichtöffnungen vorgeschlagen, bei denen ein Versatz um einen gewissen Betrag unkritisch ist und bei denen die Gefahr der Verschmutzung geringer ist als bei sehr kleinen Lichtöffnungen.

Bei beiden Varianten nach den Patentansprüchen 1 und 9 handelt es sich um unterschiedliche Bauweisen der Steckvorrichtungen, wobei die Variante, die dem Patentanspruch 1 zugrundeliegt, auf einer sogenannten "angeflexten Steckvorrichtung" basiert, während die Variante, die dem Patentanspruch 9 zugrundeliegt, eine wiederanschließbare Steckvorrichtung darstellt.

Wichtig für eine gute optische Verbindung ist die Einhaltung gleichbleibender Abstände und Toleranzen zu den elektrischen Kontakten, d. h., es muß darauf geachtet werden, daß die Gesamtkonfiguration der elektrischen und optischen Elemente nicht durch unzulässige Abweichungen beeinträchtigt wird.

Dadurch, daß zur Halterung und Fixierung der elektrischen und optischen Elemente ein gemeinsamer Basiskörper bzw. Steckerkörper verwendet wird, kann die Zuordnung und Lage des Kontaktbildes der optischen Einrichtung (Lichteintritts- und/oder Lichtaustrittsfenster) zum Kontaktbild der elektrischen Einrichtung exakt festgelegt werden und bleibt dann immer erhalten. Fertigungs- und montagebedingte Abweichungen können nicht auftreten.

Für eine 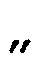 angeflexte Steckvorrichtung 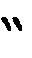 bietet sich die Möglichkeit, Anschlußleitung, Basiskörper samt elektrischer und optischer Einrichtungen als vormontierte Baueinheit herzustellen und anschließend mit dem Isoliermantel zu umhüllen. Hierfür werden die elektrischen Kontaktverbindungen in an sich bekannter Weise hergestellt, indem die elektrischen Adern L, N und ggf. der Schutzleiter mit den Anschlußköpfen der Einsteckkontakte und des Schutzleiters jeweils durch Quetsch- oder Crimpanschlüsse verbunden sind.

Die Anbringung der Lichtleiter der Anschlußleitung am Basiskörper erfolgt mit Aufnahmen, die dem Querschnitt der Lichtleiter angepaßt sind und Zugentlastungselementen, mit denen die Lage der Lichtleiter fixiert wird. Die Enden der Lichtleiter werden in die Aufnahmen soweit hineingesteckt, bis die Lage ihrer optisch wirksamen Stirnflächen den Lichtein- oder Lichtaustritt im Bereich der Lichtfenster ermöglicht.

Im Normalfall kann die optisch wirksame Querschnitts-Stirnfläche des Lichtleiters bündig mit dem Rand der Aufnahme im Bereich des Lichtfensters abschließen. In diesem Fall kann eine hülsenartige Aufnahme für den Lichtleiter bis an das Lichtfenster des Isoliermantels vorgezogen sein.

Im Annahmefall liegen die Stirnfläche der Aufnahme und die Stirnfläche des Lichtleiters in der Ebene des Lichtfensters; die Stirnfläche des Lichtleiters ist dann gleichzeitig Lichtfenster des Isoliermantels. Diese Ausführung ist vorteilhaft, wenn keine Linsenkopplung vorgesehen ist oder auf spezielle lichtdurchlässige Vorsatzkörper, wie Lichtaufweitungsoptiken oder Lichtkonzentratoren, im Lichtfenster verzichtet wird.

Ist in das Lichtfenster eine Lichtaufweitungsoptik oder ein Lichtkonzentrator oder eine Linse eingesetzt, um die Übertragung weiter zu verbessern, dann ist die Lage der Stirnfläche des Lichtleiters den optischen Eigenschaften des Lichtkonzentrators oder der Linse angepaßt. Als Lichtaufweitungsoptiken oder Lichtkonzentratoren können kegelige Körper verwendet werden. Es kann auch ausreichen, eine im wesentlichen plane Scheibe zu verwenden, die als Streuscheibe dient. Der Lichtkörper kann auf das Ende des Lichtleiters aufgesteckt sein.

Die Klemmelemente dienen dazu, die Lage der Lichtleiter zu fixieren, um beispielsweise unbeabsichtigte Verschiebungen zu verhindern wie sie beim Transport der vormontierten Baueinheit zur Weiterverarbeitung auftreten können, aber auch bei einer fertigen Steckvorrichtung die Lage des Lichtleiters zu sichern, wenn die Anschlußleitung einer starken mechanischen Zugbeanspruchung unterzogen wird.

Die Klemmittel können als Fortsätze der dem Lichtfenster gegenüberliegenden Seite einer hülsenartigen Aufnahme ausgebildet sein, die durch Verformung den eingeführten Lichtleiter festklemmen. Durch eine federnde Ausbildung kann auf eine nachträgliche Verformung zwecks Festklemmung des Lichtleiters verzichtet werden. Die Klemmung kann widerhakenartig erfolgen. Die koaxiale Ausrichtung der Klemmen zu den Aufnahmen verhindert ein Knicken des Lichtleiters.

Während bei der Variante der Steckvorrichtung nach Anspruch 1 bei einem Schaden an der Leitung oder an der Steckvorrichtung selbst eine Reparatur meist nicht möglich ist, also Stecker und Leitung zu ersetzen sind, kann bei der Variante der Steckvorrichtung nach Anspruch 9 im Schadensfall wenigstens ein Teil wiederverwendet werden, entweder die Leitung oder die Steckvorrichtung.

Dementsprechend sind auch für die Anschlußenden der optischen Leitungsadern lösbare Klemmen vorgesehen, die so ausgebildet sind, daß sie den Adermantel nicht beschädigen, bzw. den Querschnitt des Lichtleiters nicht wesentlich verformen.

Vorteilhaft wird eine großflächige Kontaktfläche vorgesehen, wobei der Kontaktdruck einer Klemmschraube über ein profiliertes Druckstück auf den Mantel der optischen Ader übertragen wird. Anstelle der Klemmschraube kann auch eine Feder zur Erzeugung der Klemmkraft verwendet werden.

Bei Steckvorrichtungen mit einer quer zur Steckrichtung verlaufen Leitungseinführung sollte die Führung der optischen Adern mit einem verhältnismäßig großen Bogen erfolgen, damit ein Knicken verhindert wird.

Die erfindungsgemäße Ausbildung der Steckvorrichtung ermöglicht einen Simplex-Betrieb für die Nachrichtenübertragung, einen Halbduplex-Betrieb und einen Vollduplex-Betrieb. Bei einem bidirektionalen Bus kann mit einem Lichtleiter oder mit zwei Lichtleitern gearbeitet werden. Bei solchen elektrischen Steckvorrichtungen, bei denen der Stecker in unterschiedlichen Einsteckstellungen in die Steckdose (Kupplungssteckdose) eingesteckt werden kann, wird vorteilhaft nur ein Lichtleiter verwendet, wobei die Lichtfenster zentral, beispielsweise in der Mitte zwischen den Steckerstiften bzw. Einsteckkontakten, angeordnet sind. Bei dieser Anordnung bietet sich ein Halbduplex-Betrieb an, der den Anforderungen für die Gebäudesystemtechnik entspricht.

Läßt die Steckvorrichtung zwei um 180° versetzte Einsteckstellungen zu und wird aus konstruktiven Gründen auf die zentrale Anordnung des Lichtfensters verzichtet, sind zwei diametral gegenüberliegende Lichtfenster vorgesehen, die beispielsweise über einen 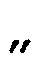 Y-Splitter 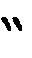 an den Lichtleiter angekoppelt sind. Ist diese Konfiguration sowohl beim Stecker als auch bei der Kupplungssteckdose vorhanden, ist bei der zusammengefügten Steckvorrichtung (Stecker und Kupplungssteckdose) stets jedes Lichtfensterpaar optisch miteinander gekoppelt. Übertragungsverluste werden weitgehend verhindert. Hat nur der Stecker oder die Kupplungssteckdose diese Doppelkonfiguration, erfolgt die optische Kopplung in jeder Einsteckstellung über je ein Lichtfenster.

Wird ein Lichtleitersystem mit zwei Lichtleitern verwendet, ist jeder Lichtleiter mit je einem Lichtfenster gekoppelt. Die Lage der Lichtfenster bei einer Steckvorrichtung mit Unverwechselbarkeitsmerkmalen ist in gewissen Grenzen frei wählbar, beispielsweise können die Lichtfenster auf einer Achse zwischen den elektrischen Kontakten oder parallel dazu angeordnet werden. Bei einer Steckvorrichtung mit zwei um 180° versetzten Einsteckstellungen gelten sinngemäß die vorstehend gemachten Angaben für die Steckvorrichtung mit nur einem Lichtleiter.

Nachfolgend werden anhand der Zeichnungen Ausführungsbeispiele der Erfindung näher erläutert.

Es zeigen:
- Fig. 1: die Ansicht auf die Stirnfläche eines Steckers,
- Fig. 1a: das Schema einer Anordnung von paarweise zugeordneten Lichtfenstern mit Y-Splittern,
- Fig. 2: einen Längsschnitt durch den Stecker nach Fig. 1, entlang der Linie A-B,
- Fig. 2a: ein Detail des Steckers im Bereich der Lichtleiterbefestigung,
- Fig. 2b: eine Variante des Details nach Figur 2a,
- Fig. 3: die Draufsicht auf den Einsatzkörper des Steckers nach Fig. 1,
- Fig. 4: einen Schnitt durch den Einsatzkörper nach Fig. 3 entlang der Linie C-D,
- Fig. 5: einen Schnitt durch den Einsatzkörper nach Fig. 3 entlang der Linie E-F,
- Fig. 6: die vormontierte Baueinheit eines Einsatzkörpers und Anschlußleitung in der Draufsicht,
- Fig. 7: einen Schnitt durch den Einsatzkörper nach Fig. 6 entlang der Linie G-H,
- Fig. 8: einen Schnitt durch den Einsatzkörper nach Fig. 6 entlang der Linie K-L,
- Fig. 9: einen wiederanschließbaren Stecker mit einer abgenommenen Haube,
- Fig. 10: die Ansicht auf die Stirnseite des Steckers nach Fig. 9,
- Fig. 11: die Innenansicht des Steckers nach Fig. 9,
- Fig. 12: einen Schnitt durch eine Klemme für die optische Leitungsader entlang der Linie M-N in Fig. 11,
- Fig. 13: einen Schnitt durch eine Kupplungssteckdose entlang der Linie O-P in Fig. 14,
- Fig. 14: eine Ansicht auf die Stirnseite der Kupplungssteckdose,
- Fig. 15: ein Detail der Kupplungssteckdose im Bereich der Lichtleiteraufnahme,
- Fig. 16: eine weitere Ausführung der Lichtleiteraufnahme.

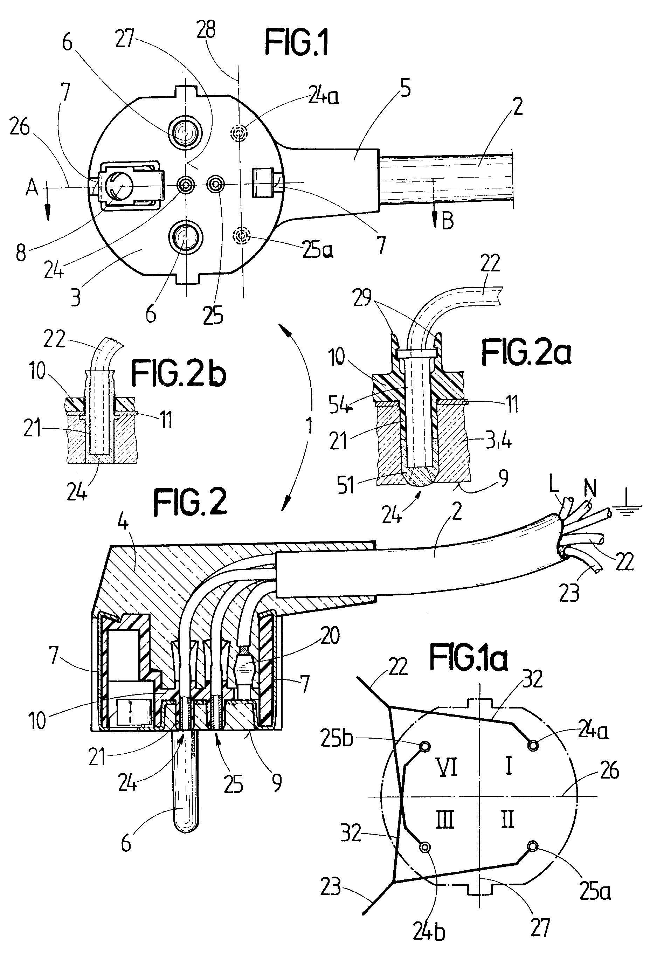

Bei dem Stecker 1 nach Fig. 1 und 2 handelt es sich um einen mit der Anschlußleitung 2 unlösbar verbundenen Stecker.

Ein derartiger Stecker in Verbindung mit der Anschlußleitung wird vorwiegend zum Anschluß externer Geräte an das Stromnetz verwendet. Gleichzeitig wird mit dem Einstecken des Steckers 1 in eine entsprechende Steckdose eine Signalverbindung von einer Busleitung über den Stecker zum externen Gerät hergestellt, so daß dieses Gerät ferngesteuert werden kann.

Der Stecker 1 ist ein sogenannter "angeflexter" bzw. "angespritzter" Stecker, weil an das Ende der Anschlußleitung 2 der Isoliermantel des Steckers 1 im Spritzwerkzeug durch Spritzen angeformt wird. Der Isoliermantel besteht vorteilhaft aus Gummi oder PVC.

Der Isoliermantel wird gebildet aus dem Steckerkörper 3, der die Kontur für die Aufnahme in eine entsprechende Steckdose bildet, einem Griffteil 4 und einer Tülle 5 im Bereich der Leitungseinführung.

Der Stecker 1 ist ein Winkelstecker mit einer quer zu den Steckerstiften 6 in den Stecker 1 eingeführten Anschlußleitung 2.

Der Stecker 1 ist als Schutzkontaktstecker mit zwei verschiedenen Schutzkontaktsystemen ausgebildet, einem ersten mit zwei gegenüberliegenden Randkontakten 7 an den Längsseiten des Steckerkörpers 3 und einem zweiten mit einer Einsteckbuchse 8 an der Stirnseite 9 des Steckerkörpers 3. Somit paßt der Stecker 1 mit einer Steckdose nach belgischer Norm und mit einer Steckdose nach deutscher Norm zusammen.

In dem Steckerkörper 3 eingebettet ist ein Basiskörper 10 aus hartelastischem Isolierstoff. An diesem "harten Kern" sind die Steckerstifte 6 und ein u-förmiger Federbügel 11 befestigt, dessen freie Schenkel die Randkontakte 7 bilden und an dessen Mittelschenkel die Einsteckbuchse 8 angeformt ist.

Der Einsatzkörper 10 besteht aus einer Grundplatte 12 mit einem im wesentlichen rautenartigen Grundriß mit einer Längsachse 13 und einer Querachse 14. In den diametral gegenüberliegenden Ecken der Querachse 14 hat die Grundplatte 12 zylindrische Aufnahmen 15 für die Steckerstifte 6, die mit ihren rückseitigen Enden über die Ebene der Grundplatte 12 hervorstehen und als Anschlußköpfe 16 ausgebildet sind.

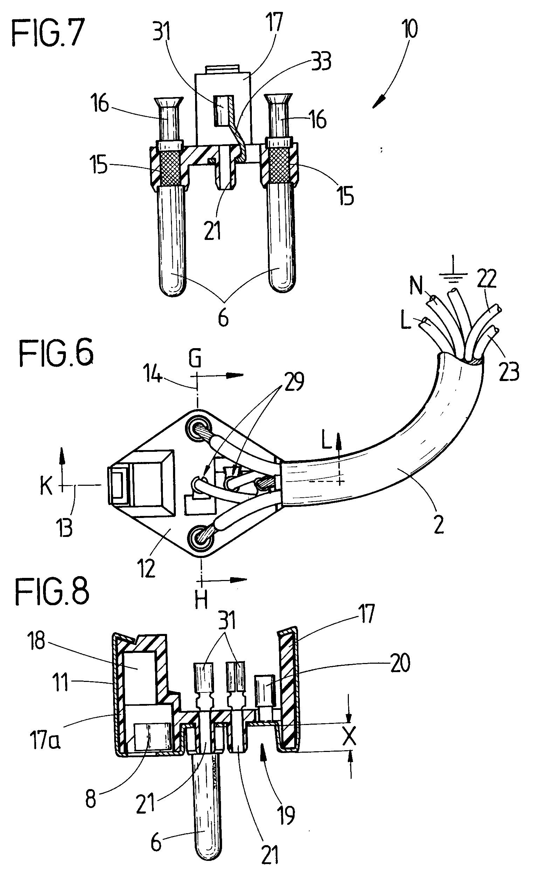

Die Anschlußköpfe 16 bilden Quetschhülsen, in die die Enden der Leitungsadern L und N eingesteckt und durch Zusammendrücken der Quetschhülsen unlösbar an den Steckerstiften 6 befestigt sind (Fig. 6).

An den diametral gegenüberliegenden Eckseiten der Längsachse 13 sind senkrecht zur Grundplatte 12 verlaufende Haltestege 17, 17a an der Grundplatte angeformt, an denen der Federbügel 11 eingeclipst ist. Wie aus den Figuren 5 und 6 am besten hervorgeht, ragen die Haltestege 17, 17a an der den Steckerstiften 6 benachbarten Ebene der Grundplatte 12 um einen Betrag "x" hervor.

Der Haltesteg 17a ist erweitert zu einer Kammer 18, die zur Aufnahme des Einsteckkontaktes 8 dient. Wenn der Stecker 1 in eine entsprechende Steckdose eingesteckt ist, dient diese Kammer 18 auch zur Aufnahme des in den Einsteckkontakt 8 eingeführten Einsteckstiftes. Die Kammer 18 ist durch nicht näher bezeichnete Wände gegen das Eindringen von Isoliermantelmaterial geschützt.

Der Federbügel 11 hat an seinem Mittelschenkel eine Kröpfung 19 entsprechend der Größe des Betrages "x". Dieser Teil des Federbügels 11 ist an dem fertigen Stecker gemäß Fig. 2 vollständig vom Material des Isoliermantels umhüllt.

Im Bereich der Kröpfung 19 besitzt der Federbügel 11 einen Crimpkontakt 20, an den der Schutzleiter der Anschlußleitung 2 angeschlossen ist. Der Crimpkontakt 20 durchgreift die Grundplatte 12 an einem nicht näher bezeichneten Durchbruch.

An der Grundplatte 12 sind zylindrische Aufnahmen 21 für die Enden der Lichtleiter 22, 23 vorgesehen. Diese Aufnahmen 21 sind als Bohrungen in der Grundplatte 12 ausgebildet und setzen sich als Hülsen an der den Steckerstiften 6 benachbarten Ebene fort.

Die Hülsen sind bis an die Stirnseite 9 des Steckers 1 vorgezogen und sind gemäß Fig. 2 vom Material des Isoliermantels umgeben. Die in die Aufnahmen 21 eingeführten Lichtleiter 22, 23 schließen bündig mit der Stirnfläche 9 des Steckers ab und bilden Lichtfenster 24, 25. Durch eines der Lichtfenster treten Lichtsignale in den Stecker ein, und durch das andere Lichtfenster treten Lichtsignale aus dem Stecker 1 aus.

Mit den Aufnahmen 21 wird die Konfiguration der Lichtfenster 24, 25 zu den Steckerstiften 6 bzw. dem Schutzkontakt festgelegt. In Abhängigkeit von der Kontur des Steckerkörpers 3 ergeben sich u. U. zwei Einsteckstellungen des Steckers 1 in der entsprechenden Steckdose. Bei der Anordnung der Lichtfenster im Stecker 1 ist dieser Sachverhalt zu berücksichtigen, um zu gewährleisten, daß in jeder Einsteckstellung des Steckers eine Signalübertragung erfolgen kann.

In einer ersten Ausführung ist die Konfiguration der Lichtfenster 24, 25 in der Weise bestimmt, daß ein Lichtfenster 24 sich im Schnittpunkt der Verbindungslinie 27 der beiden Steckerstifte mit der Mittelsenkrechten 26 befindet und das Lichtfenster 25 im Abstand davon auf der Mittelsenkrechten 26 angeordnet ist.

Der Abstand der Lichtfenster 24, 25 soll so groß sein, daß eine gegenseitige Beeinflussung durch Streulicht vermieden wird; u. U. können zwischen den Lichtfenstern 24, 25 elastische Trennlippen vorgesehen werden, beispielsweise am Isoliermantel angeformt sein.

Eine andere Konfiguration der Lichtfenster ist in Figur 1 gestrichelt dargestellt. Die Lichtfenster 24 a, 25 a befinden sich auf einer Linie 28 parallel und im Abstand von der Linie 27. Die Anordnung der Lichtfenster 24a, 25a zur Mittelsenkrechten 26 ist vorzugsweise spiegelsymmetrisch.

Die vorstehend beschriebenen Konfigurationen der Lichtfenster ermöglichen eine Lichtübertragung zwischen Stecker 1 und zugehöriger Steckdose in einer bestimmten Einsteckstellung des Steckers.

Bei einer Steckdose, die zwei Einsteckstellungen des Steckers zuläßt, wäre dann die "richtige" Stellung des Steckers durch Umstecken zu finden.

Diese bei Steckvorrichtungen nach DIN 49 440 gegebene Option kann auch für die Signalübertragung erfüllt werden, indem der Stecker paarweise zugeordnete Lichtfenster besitzt, d. h. für jeden Lichtleiter 22, 23 je zwei Lichtfenster, die dann über Y-Splitter an den Lichtleiter angekoppelt sind.

Eine entsprechende Konfiguration gemäß Fig. 1a von Lichtfenstern könnte bei einem Stecker nach Fig. 1 in der Weise vorgesehen werden, daß spiegelsymmetrisch zur Linie 27 zu den Lichtfenstern 24a, 25a weitere Lichtfenster 24b, 25b vorzusehen sind und die diametral gegenüberliegenden Fenster 24a, 24b und 25a, 25b über Y-Splitter 32 mit einem Lichtleiter 22, 23 zu koppeln sind. Bei verhältnismäßig kurzen Signalstrecken, wie sie zur Steuerung von externen Geräten im Haus üblich sind, können die auftretenden Lichtverluste eines Y-Splitters verkraftet werden.

Für eine Zugentlastung der Lichtleiter 22, 23 sind zu den Aufnahmen 21 koaxial angeordnete Klemmittel 29 vorgesehen.

Die Fig. 2a zeigt eine modifizierte Anordnung der optischen Übertragungseinrichtung gemäß Fig. 1 und 2. Während bei der optischen Übertragungseinrichtung nach Fig. 1 und 2 die optisch wirksame Querschnitts-Stirnfläche bündig mit der Stirnseite 9 des Steckers abschließt und das Lichtfenster 24, 25 bildet, ist gemäß Fig. 2a vor der optisch wirksamen Querschnitts-Stirnfläche der Leitungsader 22 eine als Lichtaufweitungsoptik bzw. Lichtkonzentrator wirkender Körper 51 angeordnet. Im einfachsten Fall kann dieser Körper 51 als Streuscheibe ausgebildet sein.

Wie ersichtlich, besitzt dieser Körper 51 eine nicht näher bezeichnete Bohrung und ist auf das Ende der optischen Leitungsader 22 aufgesteckt. Der Körper 51 erzielt Linsenwirkung und fokussiert von der Stirnseite 9 einfallendes Licht auf die optisch wirksame Querschnitts-Stirnfläche der optischen Leitungsader 22. Umgekehrt soll der Körper 51 das über die Leitungsader 22 kommende Licht an der Stirnseite 9 aufweiten und in einem parallen Lichtstrahl mit wesentlich größerem Durchmesser abstrahlen. Die Stirnseite des Körpers 51 ist sphärisch ausgebildet. Bei einer planen Ausbildung wirkt der Körper 51 als Streuscheibe und verteilt das über die optische Leitungsader 22 kommende Licht über die ganze Stirnfläche. Streuverluste sind dann zu berücksichtigen. Durch den Vorsatzkörper 51 bedingt, ist die Länge der hülsenartigen Aufnahmen 21 verkürzt. Das Ende der Leitungsader 22 ist mit einer Hülse 54 aus Metall umgeben, die mit dem Mantel der Leitungsader 22 geklebt ist. Die optisch wirksame Querschnitts-Stirnfläche der Leitungsader ist poliert. Als optische Leitungsader 22 wird eine aus vielen Einzellichtleitern gebündelte Glasfaserleitung verwendet. Als Klemmittel 29 dienen Rastelemente, in die die Metallhülse mit einem nicht näher bezeichneten Rand eingerastet ist. Diese Anordnung kann an Stelle der in Fig. 2 dargestellten Anordnung verwendet werden. Sie bietet den Vorteil, daß eine partielle Verschmutzung des Lichtfensters 24 nicht zu einer Unterbrechung der Signalübertragung führt.

Der Stecker nach Fig. 1 und 2 ist für eine zweikanalige Lichtleiterübertragung mit den Lichtleitern 22, 23 ausgebildet, so daß ein Halbduplex- und ein Vollduplex-Betrieb wahlweise möglich ist. Ein Halbduplex-Betrieb ist wirtschaftlich mit einem Kanal, also mit nur einem Lichtleiter 22 möglich. Ein entsprechend ausgebildeter Stecker besitzt dann vorteilhaft nur ein, in der Mitte zwischen den Stiften 6 auf der Achse 27 (Fig. 1) angeordnetes, Lichtfenster 24, dessen optische Übertragungseinrichtung wie in Fig. 2a dargestellt und vorstehend beschrieben, ausgebildet sein kann. Es sei bemerkt, daß die in den Figuren 1, 2 und 2a dargestellten optischen Übertragungseinrichtungen selbstverständlich auch für eine Kupplungssteckdose verwendet werden können.

Gemäß Fig. 2b ist die Aufnahme 21 als eine am Basiskörper befestigte Hülse ausgebildet. Sie ist einerseits mit einem nicht näher bezeichneten Anschlag am Basiskörper bzw. dem Quersteg des Federbügels 11 abgestützt und andererseits mit ebenfalls nicht näher bezeichneten Rastelementen am Basiskörper befestigt. Die hülsenartige Aufnahme 21 wird in den Basiskörper 10 eingesteckt und verrastet und ist dann ein Teil des Basiskörpers. Die Aufnahme 21 ist aus einem lichtdurchlässigen Material gefertigt und gleichzeitig als Lichtfenster 24 ausgebildet. Als Lichtfenster 24 wird ein an der Hülse angeformter glatter Boden verwendet. Der Boden kann auch linsenförmig ausgebildet sein. Als Klemmittel dient der dem Lichtfenster 24 gegenüberliegende Schaft der Hülse, die durch Warmverformung zusammengedrückt wird und die eingesteckte Leitungsader festklemmt.

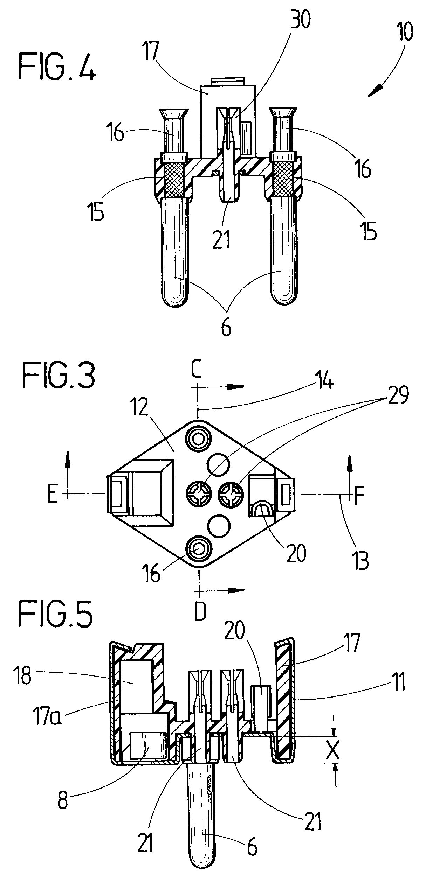

Bei der Ausführung des Basiskörpers 10 nach Fig. 3 bis 5 werden als Klemmittel 29 geschlitzte Spreizhülsen 30, die im Randbereich ringsum die Aufnahme 21 herum an der den Steckerstiften 6 gegenüberliegenden Rückseite der Grundplatte 12 angeformt sind, verwendet.

Zur Halterung der Lichtleiter 22, 23 am Basiskörper 10 sind die Enden der Lichtleiter in die Spreizhülsen 30 eingesteckt. Nicht näher bezeichnete Einführtrichter erleichtern das Einstecken. Mit den federnden geschlitzten Teilen der Spreizhülsen 30 werden die Lichtleiterenden 22, 23 festgeklemmt und gegen eine unbeabsichtigte Verschiebung gesichert.

Bei der Ausführung des Basiskörpers 10 nach Fig. 6 bis 8 sind die Klemmittel 29 als Quetschhülsen 31 ausgebildet, die am Mittelschenkel des Federbügels 11 über Laschen 33 angeformt und in eine koaxial zu den Aufnahmen 21 ausgerichtete Lage gebogen sind. Der eingeführte Lichtleiter 22, 23 wird durch Zusammendrücken der Quetschhülse 31 festgeklemmt.

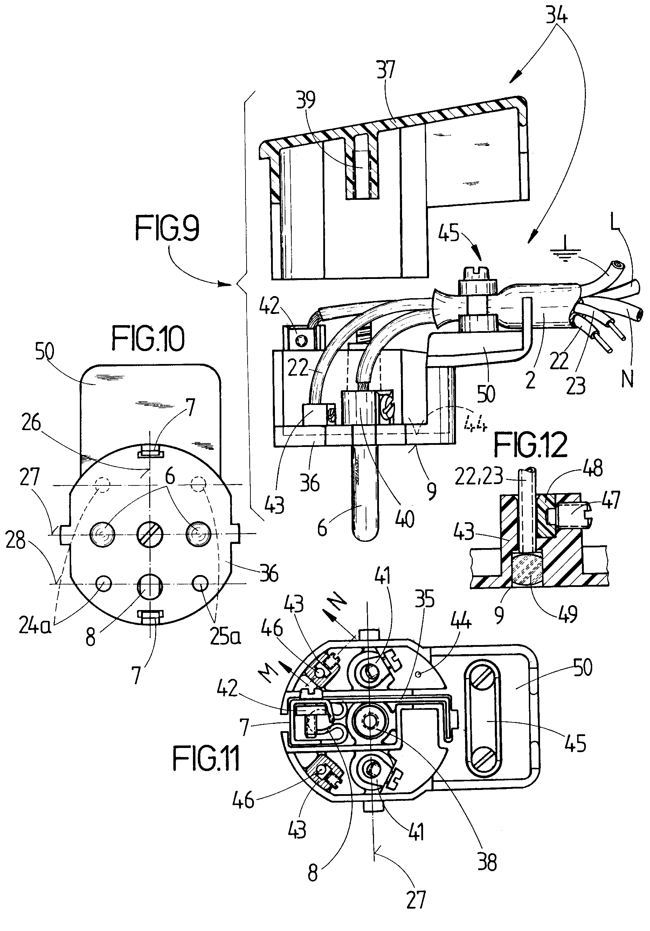

Die Figuren 9 bis 12 zeigen einen Stecker 34 zum lösbaren Anschluß der Leitung 2.

Der Stecker 34 besteht aus einem die elektrischen Kontakte, wie Steckerstifte 6 sowie einen Schutzkontaktbügel 35, tragenden Basiskörper 36 aus Isolierstoff sowie einer Abdeckhaube 37 ebenfalls aus Isolierstoff.

Die Verbindung der beiden Teile 36, 37 erfolgt mit einer zentralen, nicht näher bezeichneten, Schraube, für die im Basiskörper 36 eine Schraubenaufnahme 38 und in der Haube 37 eine Gewindeführung 39 vorgesehen ist.

Der Stecker 34 besitzt wie Stecker 1 zwei Schutzkontaktsysteme. Hierfür hat der Schutzkontakbügel 35 zwei gegenüberliegende Randkontakte 7, die sich an den Längsseiten des Steckerkörpers 36 erstrecken.

Der Schutzkontaktbügel 35 hat ferner einen Einsteckkontakt 8 an der Stirnseite 9 des Basiskörpers 36.

Es sei bemerkt, daß die Konfigurationen der elektrischen und optischen Kontakte sowie die Profilierung der Hauptmaße für beide Stecker 1 und 34 gleich sind, insbesondere deren Profilierung der Stirnflächen 9, so daß im Schadensfall der Stecker 1 durch Kappen von der Leitung 2 entfernt und durch den Stecker 34 ersetzt werden kann.

Der Basiskörper 36 besitzt an seiner, den Steckerstiften 6 gegenüberliegenden, Innenseite 44 Aufnahmen 40 für die Anschlußköpfe 41 der Steckerstifte 6.

Diese Anschlußköpfe 41 sind als Schraubklemmen zum Anschließen der Leitungsadern L, N ausgebildet. Für den Schutzleiter 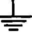 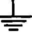 ist eine am Schutzkontaktbügel 35 angeordnete Schraubklemme 42 vorgesehen.

Es sind Türmchen 43 vorgesehen, die in Bezug zur Verbindungslinie 27 der Anschlußköpfe 41 an der zur Zugentlastungsvorrichtung 45 abgewandten Innenseite 44 des Basiskörpers 36 angeordnet sind.

Diese Türmchen 43 sind einstückig am Basiskörper 36 angeformt. Sie weisen eine als Längsbohrung ausgebildete Aufnahme 46 für die optischen Leitungen 22, 23 auf, die an der Stirnfläche 9 des Basiskörpers 36 austreten und dort eine koaxiale Anordnung mit den Lichtfenstern 24a, 25a bilden.

Wie bei Stecker 1 sind bei Stecker 34 (Fig. 10) zwei Lichtfenster 24a, 25a auf einer zur Verbindungslinie 27 der Steckerstifte 6 im Abstand dazu verlaufenden Parallelen 28 angeordnet.

Das eine Lichtfenster ist für den Lichteintritt und das andere für den Lichtaustritt bestimmt, wobei die Anordnung links und rechts von der Mittelsenkrechten 26 vorgesehen ist und die Abstände von der Achse 26 gleich groß sind.

Die Anordnung der Lichtfenster 24a, 25a kann wahlweise links oder rechts von der Verbindungslinie 27 vorgesehen sein.

Wie bei der Ausführung des 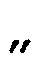 angeflexten Steckers 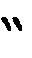 nach Fig. 1 und 2 kann auch bei dieser Ausführung eine einkanalige Übertragung mit nur einem Lichtleiter 22 oder 23 vorgesehen werden. Bei einem Stecker, der in zwei um 180° versetzte Einsteckstellungen zuläßt, ist das Lichtfenster 24a oder 25a zentral in der Mitte zwischen den Stiften 6 auf der Achse 27 (Fig. 11) angeordnet. Die in Fig. 11 an dieser Stelle plazierte Haubenbefestigung 38, 39 ist dann an einer anderen Stelle vorzusehen.

Bei den optischen Leitungsadern 22, 23 handelt es sich um solche Lichtleiter bzw. Lichtwellenleiter, deren Seele von einem Mantel umgeben ist. Für den Anschluß werden die Enden der optischen Leitungsadern 22, 23 in die Aufnahmen 46 soweit hineingesteckt, bis deren ggf. polierte Stirnflächen bündig mit der Stirnseite 9 des Steckerkörpers 6 abschließen. Damit sind die Lichtfenster 24a, 25a gebildet.

Die Lage der optischen Leitungsadern 22, 23 wird fixiert mit den Klemmitteln 47, die in den Türmchen 43 integriert sind. Es handelt sich dabei um Schraubklemmen, die über ein Druckstück 48 auf den Mantel des optischen Leiters 22, 23 wirken. Die Druckstücke 48 können dem Querschnitt der Leitungsadern 22, 23 angepaßte, nicht näher bezeichnete, Profilierungen aufweisen.

Die Figur 12 zeigt eine Ausführung mit Linsenkopplung der optischen Leitungsadern 22, 23. Hierfür sind in die Lichtfenster 24a, 25a Linsen 49 eingesetzt, und die Enden der optischen Leitungsadern 22, 23 sind bis an die Oberfläche der Linsen 49 eingesteckt.

Die übliche Zugentlastungsvorrichtung 45 für die Anschlußleitung 2 ist schellenartig ausgebildet und an einem quer zum Steckerkörper 36 auskragenden Arm 50 angeordnet, der von der Haube 37 überdeckt wird.

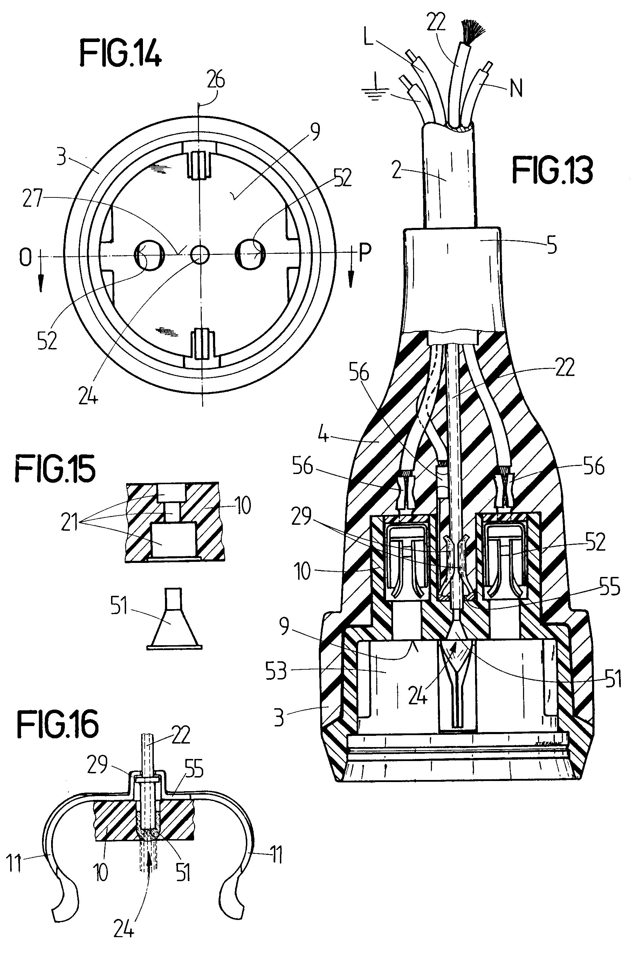

Die Figuren 13 und 14 zeigen eine bewegliche Steckdose, eine sogenannte Kupplungssteckdose. Es handelt sich dabei um eine 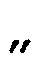 angeflexte Kupplung 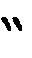 entsprechend dem eingangs beschriebenen 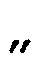 angeflexten Stecker 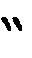 , also um eine nichtwiederanschließbare Kupplungssteckdose.

In den Figuren 13 bis 16 sind diejenigen Bezugszeichen aus den übrigen Figuren 1 bis 8 übernommen, die gleiche Teile bezeichnen. Im Gegensatz zum Stecker nach Fig. 1 und 2, bei dem es sich um einen 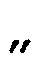 Winkelstecker 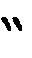 handelt, ist die Leitung 2 der Kupplungssteckdose zentral eingeführt.

Der Basiskörper 10, gemäß Fig. 13, ist zur Aufnahme der Einsteckkontakte 52 ausgebildet. Die Einsteckkontakte 52 sind, wie an sich bekannt, als federnde Steckklemmen für die Steckerstifte 6 des Steckers ausgebildet. Die Aufnahmen für die Einsteckkontakte 52 sind Kammern, die voneinander durch eine nicht näher bezeichnete Ausnehmung getrennt sind, die den Quersteg 55 des Federbügels 11 aufnimmt. Von den Einsteckkontakten 52 ragen Quetschhülsen 56 aus den Kammern heraus. Ebenso ragt vom Quersteg 55 eine Quetschhülse 56 aus der Ausnehmung hervor. An die Quetschhülsen 56 sind die Ende der elektrischen Leitungsadern L, N und Schutzkontakt angeschlossen.

Die hier beschriebene Kupplungssteckdose gemäß Fig. 13 und 14 besitzt eine topfförmige Aufnahme für den Stecker, genannt Steckdosentopf 53. Dieser Steckdosentopf 53 ist aus demselben Material gefertigt wie der Basiskörper 10 und ist einstückig mit dem Basiskörper 10 ausgebildet bzw. ist Bestandteil des Basiskörpers 10 (Fig. 13). Der Isoliermantel 3, 4, 5 wird also an dieser Stelle durch die Stirnseite 9 des Basiskörpers gebildet. Dementsprechend enthält der Isolierkörper ein Lichtfenster 24 und eine Aufnahme 21 für den Lichtleiter 22.

Aus Figur 14 ist zu entnehmen, daß das Lichtfenster 24 zentral, d.h. in der Mitte zwischen den Steckkontakten 52, auf der Achse 26 angeordnet ist.

Die optische Leitungsader 22 der Leitung 2 ist mit dem Ende in die Aufnahme 21 des Basiskörpers 10 eingesetzt und mit Klemmittel 29 fixiert. Bei dem Klemmittel 29 handelt es sich um eine federnde Klemmhülse, die durch abgewinkelte Teile des Querstegs 55 des Federbügels 11 gebildet ist.

In Fig. 15 ist eine detaillierte Aufnahme 21 für die Kopplung des Lichtleiters 22 mit dem Lichtfenster 24 dargestellt. Die Aufnahme nach Fig. 15 ist dreistufig ausgebildet und dient zur Kopplung der optisch wirksamen Querchnitts-Stirnfläche des Lichtleiters 22 mit dem Lichtfenster 22. Die Kopplung erfolgt hier über einen kegeligen Lichtkonzentrator 51, der einen nicht näher bezeichneten Hals oder Ansatz aufweist, der etwa dem Durchmesser der optisch wirksamen Querschnitts-Stirnfläche des Lichtleiters 22 entspricht. Durch die Aufnahme 21 sind die beiden genannten Teile exakt geführt, so daß eine abstandslose und versatzfreie Kopplung erfolgen kann. Hierfür ist das Ende des Lichtleiters 22 in den oberen Teil der Aufnahme 21 und der Lichtkonzentrator mit seinem Hals in den mittleren Teil der Aufnahme 21 und mit seinem Kegelteil in den unteren Teil der Aufnahme 21 eingesetzt und zusätzlich mit einem Epoxidkleber geklebt. Der Lichtkonzentrator 51 kann alternativ auch im Zweikomponentenverfahren beim Spritzen des Basiskörpers 10 in den Basiskörper integriert sein.

Die Fig. 16 zeigt eine Anordnung, die der Anordnung in Fig. 2a ähnlich ist. Die Metallhülse 54 wird zusätzlich durch den Quersteg 55 gestützt. Der Basiskörper 10 ist wie der Basiskörper 10 gemäß Fig. 4 bis 8 mit den Teilen 2, 11, 52 als vormontierte Baueinheit ausgebildet und wird dann durch Spritzen oder Pressen mit dem Isoliermantel 3, 4, 5 umhüllt.

## Patentansprüche

1. Elektrische, mit einer Leitung (2) unlösbar verbundene Steckvorrichtung, wie Stecker (1) oder Kupplungssteckdose, mit einem die elektrischen Kontakte (6;52) aufnehmenden Basiskörper (10;53) aus Isolierstoff, der von einem den Außenkörper bildenden Isoliermantel (4) umhüllt ist, der das Ende der Leitung (2) aufnimmt, deren Anschlußadern (L,N) jeweils mit den Anschlußköpfen (16;56) der Kontakte (6;52) verbunden sind,
**dadurch gekennzeichnet**,
daß neben den elektrischen Leitungsadern (L,N) noch wenigstens eine optische Leitungsader (22,23) in die Leitung (2) und in den Isoliermantel (3,4) eingebettet ist und das Ende der Leitungsader (22,23) mit seiner optisch wirksamen Querschnitts-Stirnfläche in einer Aufnahme (21) des Basiskörpers (10;53) befestigt und die optisch wirksame Querschnitts-Stirnfläche der optischen Leitungsader (22,23) optisch mit einem Lichtfenster (24,25;24a,24b;25a,25b) des Isoliermantels (4) oder Basiskörpers (10;53) gekoppelt ist.

2. Elektrische Steckvorrichtung nach Anspruch 1, dadurch gekennzeichnet, daß der Basiskörper (10;53) für die wenigstens eine optische Leitungsader (22,23) eine bis an die Lichtfenster (24,25;24a,24b;25a,25b) des Isoliermantels (4) durchtretende Aufnahme (21) aufweist.

3. Elektrische Steckvorrichtung nach Anspruch 1 oder 2, dadurch gekennzeichnet, daß die Aufnahme (21) als eine am Basiskörper (10;53) befestigte oder befestigbare Hülse ausgebildet ist.

4. Elektrische Steckvorrichtung nach Anspruch 1-3, dadurch gekennzeichnet, daß die Aufnahme (21) aus einem lichtdurchlässigen Material gefertigt und als Lichtfenster (24,25;24a,24b;25a,25b) ausgebildet ist.

5. Elektrische Steckvorrichtung nach Anspruch 1-4, dadurch gekennzeichnet, daß im Bereich der Aufnahme (21;46) Klemmittel (29;47) für die optische Leitungsader (22,23) vorgesehen sind.

6. Elektrische Steckvorrichtung nach Anspruch 1-5, dadurch gekennzeichnet, daß die Klemmittel (29) als koaxial zu der Aufnahme (21) ausgerichtete und als federnde Spreizhülse (30) ausgebildete Teile des Basiskörpers (10) sind.

7. Elektrische Steckvorrichtung nach Anspruch 1-4, dadurch gekennzeichnet, daß das Klemmittel (29) als Quetschhülse (31) ausgebildeter Teil von am Federbügel (11) angeformten Stegen oder Laschen (33) ist.

8. Elektrische Steckvorrichtung nach Anspruch 1-5, dadurch gekennzeichnet, daß das Klemmittel (29) als warmverformbares Teil der Aufnahme (21) ausgebildet ist.

9. Elektrische, mit einer Leitung (2) verbindbare und wieder lösbare Steckvorrichtung, wie Stecker oder Kupplungssteckdose, mit einem die elektrischen Kontakte (6) aufnehmenden Basiskörper (36) aus Isolierstoff mit einer Zugentlastungsvorrichtung (45) für die Leitung (2) und einer den Basiskörper (36) abdeckenden lösbaren Haube (37), wobei die elektrischen Anschlußadern (L,N) jeweils mit den Anschlußköpfen (41) der Kontakte (6) verbunden sind,
**dadurch gekennzeichnet**,
daß neben den elektrischen Leitungsadern (L,N) noch wenigstens eine optische Leitungsader (22,23) in die Leitung (2) eingebettet und in die Steckvorrichtung einführbar ist, daß der Basiskörper (36) für jede der optischen Leitungsadern (22,23) jeweils eine bis an ein Lichtfenster (24,25;24a,24b;25a,25b) an der Stirnfläche (9) des Basiskörpers (36) durchgreifende Aufnahme (46) für das Ende einer optischen Leitungsader (22,23) aufweist, und daß im Bereich der Aufnahmen (46) lösbare Klemmittel (47) für die optischen Leitungsadern (22,23) vorgesehen sind.

10. Elektrische Steckvorrichtung nach Anspruch 9, dadurch gekennzeichnet, daß die Klemmittel (47) als Schraubklemmen mit jeweils radial auf dem Mantel der optischen Adern (22,23) wirkenden Druckstücken (48) ausgebildet sind.

11. Elektrische Steckvorrichtung nach Anspruch 9 oder 10, dadurch gekennzeichnet, daß die Zugentlastungsvorrichtung (45) an einem quer zum Basiskörper (36) auskragenden Arm (50) angeordnet ist.

12. Elektrische Steckvorrichtung nach Anspruch 9-11, dadurch gekennzeichnet, daß die Aufnahmen (46) in bezug zur Verbindungslinie (27) der Anschlußköpfe (41) in der der Zugentlastungsvorrichtung (45) abgewandten Hälfte des Basiskörpers (36) angeordnet sind.

13. Elektrische Steckvorrichtung nach Anspruch 1-12, dadurch gekennzeichnet, daß vor der optisch wirksamen Querschnitts-Stirnfläche der Leitungsader (22,23) ein als Lichtaufweitungsoptik und/oder als Lichtkonzentrator wirkender Körper (51) angeordnet ist.

14. Elektrische Steckvorrichtung nach Anspruch 13, dadurch gekennzeichnet, daß der Körper (51) kegelförmig ausgebildet ist.

15. Elektrische Steckvorrichtung nach Anspruch 13, dadurch gekennzeichnet, daß der Körper (51) als Streuscheibe ausgebildet ist.

16. Elektrische Steckvorrichtung nach einem der Ansprüche 13-15, dadurch gekennzeichnet, daß der Körper (51) auf das Ende der optischen Leitungsader (22,23) aufgesteckt ist.

17. Elektrische Steckvorrichtung nach einem der Ansprüche 13-15, dadurch gekennzeichnet, daß der Körper (51) in die Aufnahme (21,46) eingesetzt ist.

18. Elektrische Steckvorrichtung nach einem der Ansprüche 13-17, dadurch gekennzeichnet, daß der Körper (51) für einen Stecker und für eine Kupplungssteckdose gleich große Lichtöffnungen aufweist.

19. Elektrische Steckvorrichtung nach Anspruch 1-18, dadurch gekennzeichnet, daß in die Lichtfenster (24,25;24a,24b;25a,25b) Linsen (49) eingesetzt sind.

20. Elektrische Steckvorrichtung nach Anspruch 19, dadurch gekennzeichnet, daß die optische Leitungsader (22,23) mit der optisch wirksamen Querschnitts-Stirnfläche bis an die Oberfläche der Linse (49) eingesteckt ist.

21. Elektrische Steckvorrichtung nach einem der Ansprüche 1-20, dadurch gekennzeichnet, daß an der Stirnfläche (9) wenigstens ein auf der Mittelsenkrechten (26) der Verbindungslinie (27) der Kontakte (6;52) angeordnetes Lichtfenster (24) vorgesehen ist.

22. Elektrische Steckvorrichtung nach einem der Ansprüche 1-21, dadurch gekennzeichnet, daß ein in der Mitte zwischen den Kontakten (6;52) angeordnetes Lichtfenster (24) und im Abstand davon wenigstens ein weiteres auf der Mittelsenkrechten (26) der Verbindungslinie (27) der Kontakte angeordnetes Lichtfenster (25) vorgesehen ist.

23. Elektrische Steckvorrichtung nach einem der Ansprüche 1-22, dadurch gekennzeichnet, daß zwei Lichtfenster (24a,25a) auf einer im Abstand zu der Verbindungslinie (27) der Kontakte (6;52) verlaufenden Parallelen (28) angeordnet sind.

24. Elektrische Steckvorrichtung nach einem der Ansprüche 1-23, dadurch gekennzeichnet, daß in jedem der durch die Verbindungslinie der Kontakte (6) und ihrer Mittelsenkrechten (26) gebildeten Quadranten (I,II,III,IV) je ein Lichtfenster (24a,24b;25a,25b) vorgesehen ist, wobei die Lichtfenster eine spiegelsymmetrische Anordnung bilden und die diametral gegenüberliegenden Lichtfenster (24a,24b;25a,25b) über Y-Splitter (32) an die optischen Leitungsadern (22,23) angekoppelt sind.

25. Elektrische Steckvorrichtung nach einem der Ansprüche 1-24, dadurch gekennzeichnet, daß bei einer Kupplungssteckdose der Basiskörper (10) und der Steckdosentopf (53) einstückig ausgebildet sind.
